# EUROPEAN PATENT SPECIFICATION

(11) **EP 1 455 174 B1**
(45) Date of publication and mention of the grant of the patent: **15.12.2004**
(21) Application number: 03005010.8
(22) Date of filing: 05.03.2003
(51) Int. Cl.: G01N 1/30

(54) **Fixative**
Fixierungslösung
Solution de fixation

(43) Date of publication of application: 08.09.2004
(73) Proprietor: Milestone S.r.l., 24010 Sorisole (BG) (IT)
(72) Inventor: Visinoni, Francesco, 24010 Sorisole (BG) (IT)
(74) Representative: Rupp, Christian, Dipl.Phys.

(56) References cited:
- EP-A- 0 311 035
- GB-A- 1 557 722
- US-A- 4 578 282
- US-A- 4 666 699
- US-A- 5 508 175
- US-A1- 2002 094 577

## Description

The present invention is directed to an ethanol-based formalin-free fixative, a kit comprising the fixative and their use in histopathology, cytology and immunohistochemistry.

In surgical pathology practice the most widely used fixative is an aqueous solution of formaldehyde which is called formalin and used at a concentration of 4%. The first mention of formaldehyde as a fixative was by F. Blum in 1896 (source: The Journal of Histotechnology, Vol. 24, No. 3, September 2001, pages 155 to 162).

After fixation, all the specimens are dehydrated in an increasing concentration of ethanol, put in xylene for clearing before impregnation in paraffin to obtain blocks. Those blocks will be cut in tiny slices to a thickness of some microns and stained with the standard hematoxylin-eosin for morphological evaluation.

The time required for the traditional fixation and processing of a specimens is usually between 24 and 48 hours. In case of biopsy materials which are commonly rather small fragments, it may be reduced to some hours.

In addition, in the last years, the use of microwaves has dramatically reduced the fixation and processing periods resulting in obtaining so-called "same day diagnosis", even with surgical specimens.

It is known that the use of aldehydes for fixation has some severe disadvantages. Formalin is irritating for the mucosae and has also been indicated as a carcinogen for oropharynx and respiratory tract. For these reasons, it can be only used with caution requiring safety standards such as working under the hood, wearing protective gloves and goggles, with specific measurements concerning formalin contaminated waste (The Journal of Histotechnology, Vol. 24, No. 3, September 2001, pages 165 to 175).

It is also known that formalin causes important protein-protein and nucleic acid - protein cross linkings (The Journal of Histotechnology, Vol. 24, No. 3, September 2001, pages 151 and 152). This makes it difficult to extract undamaged mRNA and/or DNA from formalin fixed paraffin processed tissues. Therefore, recovery of intact mRNA and/or DNA molecules from tissue samples which have been fixed with formalin and processed in paraffin is under question. With the increasing importance of molecular biology studies and methods, needing the recovery of intact mRNA and/or DNA molecules, these cross linking effects have become a severe limitation concerning the use of such material for molecular biology studies, in particular for gene-profiling analysis.

The need of material suitable for molecular analysis has become very important in the last years, especially after the completion of the Human Genome Project, and these studies will give important insights in the nature of many diseases, with important therapeutical implications. Despite the efforts to obtain optimal genetic material from formalin-fixed specimens, the results are substantially poor and not uniform.

To prevent nucleic acids degradation, fresh material is usually taken, frozen in liquid nitrogen immediately after surgical operation and kept in special refrigerators at -80°C.

For this reason part of the specimen is no more suitable for morphological analysis, but if still a diagnosis has to be made with frozen sections, many artefacts due to freezing will occur. Another possibility is to fix the frozen material and process it routinely, but also this material will show many artifacts and its antigenicity may be compromised, with possible errors in the interpretation of the results of immunoreactions. Finally, the genetic material obtained from fresh specimens is derived from all the cells present, not only from the cells to be investigated.

For these reasons, there has been an increasing interest concerning alternative fixatives which allow a complete morphological evaluation of the material together with recovery of good quality DNA/RNA/proteins. Paraffin blocks are much more easy to handle and store than frozen material. In addition, the researchers will be enabled to collect particular areas of the specimen using Laser Capture Microdissection, to study tumor heterogeneity, without contamination from other cells present in the background substance (connective cells, lymphocytes, etc).

The formalin alternatives can be subdivided in two broad categories:
- Alcohol-based
- non alcohol-based

The first group comprises ethanol as such, some well-known mixtures (for example Camoy's fixative and its derivative Methacarn, both containing chloroform and the latter methanol instead of ethanol) and some other fixatives such as NeoFix and Kryofix).

US patent US-A-5 508 175 discloses a formalin free fixative-stain system, which gives good preservation of nuclear details, is free from toxic mercury compounds and includes a zinc salt and a cobalt salt, polyvinyl alcohol (PVA), ethanol, water and glycerol.

European Patent EP-A-0 311 035 teaches a formalin free fixative containing standard non-toxic components comprising one or more alkanols such as ethanol, one or more diols and triols such as ethylene glycol, 1,3-propanediol or glycerol, and one or more acids such as acetic and formic acid in an aqueous solution. A metal salt is added as a mordant.

The second group includes fixatives which are almost all based on glyoxal, a dialdehyde less hazardous than formalin, however, having a similar action on cellular components.

At present, there are only few works concerning the use of the above alternatives for molecular studies, but the results clearly indicate that ethanol and ethanol-based fixatives give at least better results than formalin (source: "Evaluation of Non-Formalin Tissue Fixation for Molecular Profiling Studies" by John W. Gillespie et al. published in the American Journal of Pathology, Vol. 160, No. 2, February 2002.

Ethanol acts as a fixative causing protein denaturation, with little or no degradation of the nucleic acids. There are, however, some limitations for molecular studies: the best results are obtained with a low temperature fixation (4°C) and with a low temperature polyester resin embedding (at 38°C). At present there is only one work on this application, performed on prostatic tissue. The use of pure ethanol for fixation usually causes a significative shrinkage at the edges of the specimens, together with some nuclear artifacts. When ethanol is used for small biopsies, the shrinkage of the tissue can affect a correct diagnosis.

Recent developments in this field have revealed that while alcoholic mixtures used as a fixative can lead to some acceptable results, optimum results have never been obtained. A variety of ethanol-based fixative is described in the Journal of Histotechnology, Vol. 23, No. 4, December 2000, pages 299 to 307.

It is therefore object of the invention, to provide a fixative as a formalin substitute which allows a rapid fixation, gives accurate morphological details and exhibits a good recovery of nucleic acids and proteins.

This object has been solved by the fixative composition of the present invention.

The present invention is defined in claim 1 of the present application.

Claim 1 concerns a formalin free fixative composition which comprises, as essential components, ethanol, water, 1, 2-propanediol, polyvinyl alcohol and an effective amount of at least one monomeric carbohydrate compound.

The sub-claims define preferred embodiments of the fixative composition of the present invention.

In addition, the present invention concerns a kit for formalin free fixation of tissue comprising a first means of keeping a mixture of water, 1, 2-propanediol, polyvinyl alcohol and an effective amount of at least one monomeric carbohydrate compound and a second means for keeping ethanol.

The sub-claims define preferred embodiments of the kit of the invention.

The fixative composition and the kit of the present invention are perfectly suited for investigation of histological and cytological specimens. The fixative composition as well as the kit are of an extremely low toxicity due to their ethanol content and they have been found to be absolutely compatible with all histoprocessors such as traditional and microwave stimulated ones.

It has been shown that the introduction of an effective amount of a monomeric carbohydrate compound in a mixture of ethanol, water, 1,2-propanediol and polyvinyl alcohol result in the provision of a highly effective fixative for histological and cytological as well as immunohistochemical purposes. The fixative of the invention is optimized for a rapid microwave-stimulated fixation and processing giving good morphological details and optimal expression of antigenic properties of various tissues and finally has demonstrated very good preservation of nucleic acids and proteins.

It has been revealed that the best result can be obtained when using a carbohydrate comprising at least three carbon atoms as the monomeric polyhydroxy compound. Experimentally best results have been obtained by using carbohydrates with 6 carbon atoms. Examples for this are hexitols such as sorbitol, mannitol and dulcitol, D-sorbitol being preferred.

The monomeric carbohydrate compound is preferably contained in the fixative in an amount of 0.05 to 2.00 wt.-%.

Ethanol is the main component of the fixative composition of the present invention. It should be contained in an amount of 50 to 85 wt.-%, 65 to 75 wt.-% being preferred.

As already mentioned in the beginning, ethanol has already been used in pathology, commonly at a concentration of 70%. In addition, it has a powerful germicide action.

The function of ethanol is to denature proteins by its dehydrating action, with a disruption of the tertiary structure thereof. This action is at least partially reversible by protein renaturation.

In the fixative composition of the present invention, it has also been chosen for its low toxicity towards methanol. Furthermore, it has been found not to interfere (as isopropylic alcohol does) with some histochemical stains.

In addition, denaturated ethanol does render the fixative very cheap. The final concentration in the present fixative is preferably 72%.

Water is contained in the fixative composition of the present invention to allow the dissolution of water soluble components in the ethanol. Water is cheap and absolutely harmless. The amount of water in the fixative composition of the present invention ranges preferably from 10 to 40 wt.-%.

1,2-propanediol is contained as a further essential component because of its anti-freezing properties. It lowers the freezing point of water and exhibits mutual solvent properties. It is perfectly soluble in water and in lipids under formation of oil-in-water emulsions and it is well-known plasticizer. It is non-toxic and widely used in cosmetics, food products and pharmaceutical formulations. Its relatively low molecular weight allows a rapid penetration in tissues and cells and its anti-freezing properties protect the tissue against the effects of low temperatures. It has been shown that 1,2-propanediol is preferably present in the fixative composition of the present invention in an amount of 3 to 20 wt.-%.

Polyvinyl alcohol is commonly known as a tissue protectant in enzyme histochemistry contributing to a reduction of the artefacts produced by freezing, cutting and thawing. The function of polyvinyl alcohol is to trap the water molecules, thus leaving less solvent water available for diffusion of molecules from the tissue section. For this reason many cellular components are "blocked" at their site inside the cell and thus can be more easily localized. Another advantage in cytological specimens is the prevention of cells' loss during staining procedures. This action may play a role in preventing the detachment of cells from amorphous material which is sometimes observed in surgical specimens (e.g. necrotic material, mucus, etc).

The monomeric carbohydrate compound contained in the fixative composition of the present invention, at least those comprising at least three carbon atoms are widely used in industry as an oil absorber, an organic solvent and as a sweetener (sugar substitute).

The low molecular weight of for example sorbitol, mannitol and dulcitol and the water solubility thereof allow rapid penetration in tissues and cells. The main function of said polyhydroxy compound is to prevent the adverse effects of ethanol, particularly the plasticizing effects thereof. They have been found to act as a thermal stabiliser and anti-denaturant for proteins and they have been evidenced to exhibit a certain kryoprotectant activity.

It has been surprisingly shown that the specific combination of components constituting the fixative composition of the present invention gives raise to a perfectly working fixative which allows a complete morphological evaluation of the tissue material together with a recovery of intact proteins and nucleic acids. Even though the working mechanism of the combined fixative is not bound to any theory, it is assumed that the action of ethanol is influenced by the other active components of the mixture, so that at least part of the tissue water is prevented from a escaping giving a less "shrinked" appearance to the cell and the background intercellular substance.

The fixative composition according to the invention may also contain additives and/or auxiliary agents to further improve the efficiency of the fixative.

Examples of the additives and/or auxiliary agents to be added are selected from acceptable salts, alcohols, ketons, carboxylic acids, sugars, polymers, aglycons and polyphenols.

Suitable salts include calcium carbonate (a phospholipid chelating agent), calcium acetate (a phospholipid chelating agent), EDTA, stagnus chloride (for membrane preservation), Na₂HPO₄ (for membrane preservation), MgCl₂, NaCl and zinc sulphate.

The alcohols which may be added to the fixative composition include mono-, di- and trihydric alcohols. Examples of monohydric alcohols are butanol and long chain fatty alcohols such as octanol and decanol. The dihydric alcohols comprise glycols such as ethylene glycol, polyethylene glycol having different molecular weights, pentylene glycol and hexylene glycol.

Examples of trihydric alcohols are triols and polytriols such as glycerol and polyglycerol.

In same cases it can be of value to add polyols such as xylitol and maltitol. The alcoholic additive should be different from the carbohydrate compound contained in the fixative composition of the invention.

If appropriate, also carboxylic acids may be added such as acetic acid (coagulant of nucleic acids) and carboxylic acids having 5 to 8 carbons atoms.

The sugars include for example fructose, sucrose, trehalose and polysaccarides including locust bean gum, xantahn gum, aratic gum, carboxymethyl cellulose and pectin, as well as carbomer (semisynthetic polysaccharide).

For certain tissue samples the addition of polymers is desirable comprising polyvinyl pyrrolidone, dextran, polyphenols and aglycons.

The amount of the additives and/or auxiliary agents to be used in the fixative composition of the present invention is not critical, however, their content should not exceed 10 g to ensure that the effectiveness of the inventive fixative composition is not affected.

The fixative composition of the present invention may be also provided as a kit for fixation. The kit may comprise a first means for keeping a mixture of water, 1, 2-propanediol, polyvinyl alcohol and an effective amount of at least one monomeric polyhydroxy compound and a second means for a keeping ethanol. The contents of the first and second means can be mixed just prior to use to provide a fixative composition. Shelf life of this fixative in kit form ranges from 6 to 9 months. If necessary, the content of the first means can be shipped separately and the user can add the ethanol by himself to prepare a fresh fixative composition.

The means for keeping the components can be any means suitable for storing and shipping. They can be made of plastic or glass material in different sizes and shapes.

In a preferred embodiment of the kit, the monomeric polyhydroxy compound is a carbohydrate comprising at least six carbon atoms. More preferably, said carbohydrate is a hexitol such as sorbitol, mannitol and dulcitol, D-sorbitol being most preferred.

When the contents of the first and the second means are mixed, a fixative is preferably provided comprising 50 to 85 wt.-% of ethanol, 10 to 40 wt.-% of water, 3 to 20 wt.-% of 1, 2-propanediol, 0.05 to 3.00 wt.-% of polyvinyl alcohol and 0.05 to 2.00 wt.-% of the at least one monomeric carbohydrate compound.

In a preferred embodiment of the kit, the mixture of the first means further contains additives and/or auxiliary agents.

The auxiliary agents have the function to improve the efficiency of the fixative. The choice of the appropriate additive(s) and/or auxiliary agent(s) is dependent on the tissue to be examined.

The additives and/or auxiliary agents to be added to the mixture contained in the first means are selected from acceptable salts, alcohols, ketons, carboxylic acids, sugars and polymers. In this context, it is referred to the above-mentioned listing of additives and/or auxiliary agents.

The fixative composition of the present invention as well as the kit according to the present invention may be used for examining tissue samples in histopathology, cytology and immunohistochemistry. The tissue samples to be examined can be any material of human or animal origin.

It has been shown that the inventive fixative composition can be successfully used to test any material excised from the human or animal body. Examples include central nervous system, thyroid, adrenal gland, hypophysis, pancreas, lung and bronchus, heart, gastrointestinal tract (esophagus, stomach, small intestine, large intestine), liver, kidney, bladder, testis, ovary, ulterus, prostate, breast, soft tissues, bone, bone marrow, lymph nodes, spleen.

The material was examined after immersion fixation of the entire organ or part of it, some reduced to small fragments, to simulate a biopsy, others as a specimen normally examined in routine histopathology. Common dimensions of specimens are 25 x 20 mm with a thickness of 3 to 4 millimetres.

Part of the material has also been fixed in formalin, with the same procedures to obtain "mirror blocks" used for routine stains and for comparisons.

The fixation may be accelerated by use of microwave applying common processing procedures without changes in time schedules or reducing them, or in a microwave processor, with periods varying from 20 minutes for biopsy material to 2 to 3 hours for larger specimens. Using the fixative composition of the present invention, it is possible to reduce the normal time processing from about 16 hours to 4 to 5 hours, for large and fatty specimens (for example breast) simply reducing the thickness thereof to about 2 millimetres. This reduction is due the properties of the fixative, which may be considered also a sort of processing fluid.

Independent of the way of further processing, the samples processed are finally embedded in paraffin blocks.

Moreover, the fixative composition and the kit of the present invention may be used in cytological preparation of several organs (CNS, breast, thyroid, etc.) either by immersing the slides in the fixative or using it as a spray, with optimal preservation of the cytological details.

Some histochemical stains have been performed in various specimens treated with the fixative composition of the present invention: PAS strain, Grocott silver methanamine; Masson's thricrome, giemsa, reticulin, toluidine blue, alcian blue, alcian blue-pas, orcein, PAS-Orange and Ziehl-Neelsen.

There was no variation observed in the staining properties between materials fixed in the fixative composition according to the present invention and formalin-fixed material.

Many specimens (biopsies and surgical specimens) have also been tested for immunohistochemical reactions with optimal results. ,

In some occasions the antigen retrieval procedures are not necessary while some cases must be slightly changed, for example, by reducing the temperature or changing the buffers. The results have been compared with their expression on formalin fixed material.

Examples of antigens to be tested: antigen of epithelial expression (cytokeratins, epithelial membrane antigen), CD antigens (CD3, 4, 8, 15, 20, 30, 45, 45RO), proliferation markers (Ki67, MIB1), intermediate filaments (vimentin, desmin, GFAP, neurofilaments), hypophyseal markers (prolactin, ACTH, GH, FSH, LH, TSH), estrogen and progesteron receptors and other such as S100 protein, actin, c-erb2, chromogranin, synaptophysin, gastrin, prostatic specific antigen.

Molecular biopsy studies have been performed and the results have been always compared with the same material fixed in formalin. The results clearly indicate a better nucleic acid recovery from tissue materials fixed in the fixative composition of the present invention. The test were performed on: spleen, tonsil, CNS tumor (oligodendroglioma), thyroid, liver (hepatocellular carcinoma) and lung. The formalin fixed material showed degraded DNA, whereas the material fixed in the fixative composition of the present invention showed large quantities of intact DNA, especially of high molecular weight.

The fixative composition of the present invention and the kit of the invention exhibit superior properties over the commonly used fixatives such as formalin and ethanol. The fixative composition and the kit of the invention are advantageous in the following aspects: a simultaneous fixation, dehydration and lipid extracting properties; no shrinkage of tissue; an optimal preservation of morphological details; an extremely low toxicity; an optimal preservation of tissues' antigenic properties with reduction of the use of antigen retrieval procedures; optimal staining properties (hematoxylin and eosin and histochemical stains); an optimal preservation of nucleic acids for molecular studies; suitable as a fixative for cytological specimens and an optimal preservation of the morphology after a prolonged period of tissue's freezing.

## Claims

1. A formalin free fixative composition comprising the following components:
- ethanol;
- water;
- 1,2-propanediol;
- polyvinyl alcohol and
- 0.05 to 2.00 wt.-% of a monomeric carbohydrate comprising at least three carbon atoms.

2. The fixative composition according to claim 1, wherein the carbohydrate has six carbon atoms.

3. The fixative composition according to claim 2, wherein the carbohydrate is a hexitol such as D-sorbitol.

4. The fixative composition according to any of claims 1 to 3, wherein ethanol, water, 1,2-propanediol and polyvinyl alcohol are contained in an amount of from 50 to 85 wt.-%, 10 to 40 wt.-%, 3 to 20 wt.-% and 0.05 to 3.00 wt.-% respectively.

5. The fixative composition according to claim 6, wherein the ethanol concentration is 65 to 75 wt.-%.

6. The fixative composition according to any of claims 1 to 5, further containing additives and/or auxiliary agents.

7. The fixative composition according to claim 6, wherein additives and/or auxiliary agents are selected from acceptable salts, alcohols, ketones, carboxylic acids, sugars and polymers.

8. A kit for fixation of tissue comprising a first means for keeping a formalin free mixture of water, 1,2-propanediol, polyvinyl alcohol and 0.05 to 2.00 wt.-% of at least one monomeric carbohydrate comprising at least three carbon atoms and a second means for keeping ethanol.

9. The kit according to claim 8, wherein the carbohydrate has six carbon atoms.

10. The kit according to claim 9, wherein the carbohydrate is D-sorbitol.

11. The kit according to any of claims 8 to 10, wherein the contents of the first and the second means are mixed providing a fixative comprising 50 to 85 wt.-% of ethanol, 10 to 40 wt.-% of water, 3 to 20 wt.-% of propanediol, 0.05 to 3.00 wt.-% of polyvinyl alcohol and the monomeric carbohydrate.

12. The kit according to any of claims 8 to 11, wherein the mixture of the first means further contains additives and/or auxiliary agents.

13. The kit according to claim 12, wherein the additives and/or auxiliary agents are selected from acceptable salts, alcohols, ketones, carboxylic acids, sugars and polymers.

14. A use of the fixative composition according to any of claims 1 to 7 or the kit according to any of claims 8 to 13, for examining tissue samples in histopathology, cytology and in immunohistochemistry.

15. The use according to claim 14, wherein the tissue samples are of organs of human and animal origin.

16. The use of claim 15, wherein a biopsy sample is examined.

17. The use according to any of claims 14 to 16, wherein the sample is fixed within a period of 15 minutes and 5 hours.

18. The use according to claim 17, wherein a biopsy sample is fixed within 20 minutes.

19. The use according to any of claims 14 to 18, wherein a biopsy sample or surgical specimen is tested for proteins and/or nucleic acids.

20. The use according to claim 19, wherein the specimen is tested for an antigen.

21. The use according to any of claims 14 to 20, wherein the fixation is carried out in the presence of microwaves.

## Patentansprüche

1. Formalinfreie Fixiermittelzusammensetzung, welche die folgenden Komponenten umfasst:
- Ethanol;
- Wasser;
- 1,2-Propandiol;
- Polyvinylalkohol und
- 0,05 bis 2 Gew.-% eines monomeren Kohlenhydrats, welches zumindest drei Kohlenstoffatome umfasst.

2. Fixiermittelzusammensetzung gemäß Anspruch 1, wobei das Kohlenhydrat sechs Kohlenstoffatome aufweist.

3. Fixiermittelzusammensetzung gemäß Anspruch 2, wobei das Kohlenhydrat ein Hexitol, wie D-Sorbit ist.

4. Fixiermittelzusammensetzung gemäß einem der Ansprüche 1 bis 3, wobei Ethanol, Wasser, 1,2-Propandiol und Polyvinylalkohol in einer Menge von 50 bis 85 Gew.-%, 10 bis 40 Gew.-%, 3 bis 20 Gew.-% bzw. 0,05 bis 3,00 Gew.-% enthalten sind.

5. Fixiermittelzusammensetzung gemäß Anspruch 6, wobei die Ethanolkonzentration 65 bis 75 Gew.-% beträgt.

6. Fixiermittelzusammensetzung gemäß einem der Ansprüche 1 bis 5, weiterhin umfassend Additive und/oder Hilfsmittel.

7. Fixiermittelzusammensetzung gemäß Anspruch 6, wobei die Additive und/oder Hilfsmittel ausgewählt sind aus akzeptablen Salzen, Alkoholen, Ketonen, Carbonsäuren, Zuckern und Polymeren.

8. Kit zur Fixierung von Gewebe, umfassend ein erstes Mittel zum Aufbewahren einer formalinfreien Mischung aus Wasser, 1,2-Propandiol, Polyvinylalkohol und 0,05 bis 2,00 Gew.-% zumindest eines monomeren Kohlenhydrats, das zumindest drei Kohlenstoffatome umfasst, und ein zweites Mittel zum Aufbewahren von Ethanol.

9. Kit gemäß Anspruch 8, wobei das Kohlenhydrat sechs Kohlenstoffatome aufweist.

10. Kit gemäß Anspruch 8, wobei das Kohlenhydrat D-Sorbit ist.

11. Kit gemäß einem der Ansprüche 8 bis 10, wobei die Inhalte des ersten und zweiten Mittels gemischt werden, um ein Fixiermittel bereitzustellen, das 50 bis 85 Gew.-% Ethanol, 10 bis 40 Gew.-% Wasser, 3 bis 20 Gew.-% Propandiol, 0,05 bis 3,00 Gew.-% Polyvinylalkohol und das monomere Kohlenhydrat umfasst.

12. Kit gemäß Anspruch 8 bis 11, wobei die Mischung des ersten Mittels weiterhin Additive und/oder Hilfsmittel umfasst.

13. Fixiermittelzusammensetzung gemäß Anspruch 12, wobei die Additive und/oder Hilfsmittel ausgewählt sind aus akzeptablen Salzen, Alkoholen, Ketonen, Carbonsäuren, Zuckern und Polymeren.

14. Verwendung der Fixiermittelzusammensetzung gemäß einem der Ansprüche 1 bis 7 oder des Kits gemäß einem der Ansprüche 8 bis 13 zum Untersuchen von Gewebeproben in der Histopathologie, der Zytologie oder in der Immunhistochemie.

15. Verwendung gemäß Anspruch 14, wobei die Gewebeproben aus Organen menschlichen oder tierischen Ursprungs stammen.

16. Verwendung gemäß Anspruch 15, wobei eine Biopsieprobe untersucht wird.

17. Verwendung gemäß einem der Ansprüche 14 bis 16, wobei die Probe innerhalb eines Zeitraums von 15 Minuten und 5 Stunden fixiert wird.

18. Verwendung gemäß Anspruch 17, wobei eine Biopsieprobe innerhalb von 20 Minuten fixiert wird.

19. Verwendung gemäß einem der Ansprüche 14 bis 18, wobei eine Biopsieprobe oder eine chirurgische Probe auf Proteine und/oder Nukleinsäuren getestet wird.

20. Verwendung gemäß Anspruch 19, wobei die Probe auf ein Antigen getestet wird.

21. Verwendung gemäß einem der Ansprüche 14 bis 20, wobei die Fixierung in Anwesenheit von Mikrowellen ausgeführt wird.

## Revendications

1. Une composition fixative sans formol comprenant les composants suivants:
- éthanol;
- eau;
- 1,2-propanediol;
- alcool polyvinylique et
- 0.05 à 2.00 % en poids d'un hydrate de carbone monomérique comprenant au moins trois atomes de carbone.

2. La composition fixative suivant la revendication 1, dans laquelle l'hydrate de carbone possède six atomes de carbone.

3. La composition fixative suivant la revendication 2, dans laquelle l'hydrate de carbone est un hexitol tel que le D-sorbitol.

4. La composition fixative suivant l'une quelconque des revendications 1 à 3, dans laquelle l'éthanol, l'eau, le 1,2-propanediol et l'alcool polyvinylique sont contenus en quantité respective de 50 à 85% en poids, 10 à 40% en poids, 3 à 20% en poids et 0.05 à 3.00% en poids.

5. La composition fixative suivant la revendication 4, dans laquelle la concentration d'éthanol est de 65 à 75% en poids.

6. La composition fixative suivant l'une quelconque des revendications 1 à 5, contenant en plus, des additifs et/ou des agents auxiliaires.

7. La composition fixative suivant la revendication 6, dans laquelle les additifs et/ou les agents auxiliaires sont sélectionnés parmi des sels acceptables, des alcools, des cétones, des acides carboxyliques, des sucres et des polymères.

8. Un kit pour fixation de tissu comprenant un premier moyen pour conserver un mélange sans formol d'eau, de 1,2-propanediol, d'alcool polyvinylique et de 0.05 à 2.00 % en poids d'au moins un hydrate de carbone monomérique comprenant au moins trois atomes de carbone et un deuxième moyen pour conserver l'éthanol.

9. Le kit suivant la revendication 8, dans lequel l'hydrate de carbone possède 6 atomes de carbone.

10. Le kit suivant la revendication 9, dans lequel l'hydrate de carbone est le D-sorbitol.

11. Le kit suivant l'une quelconque des revendications 8 à 10, dans lequel les contenus du premier et du deuxième moyens sont mélangés fournissant ainsi un fixatif comprenant 50 à 85% en poids d'éthanol, 10 à 40% en poids d'eau, 3 à 20% en poids de propanediol, 0.05 à 3.00 % en poids d'alcool polyvinylique et l'hydrate de carbone monomérique.

12. Le kit suivant l'une quelconque des revendications 8 à 11, dans lequel le mélange du premier moyen contient en plus, des additifs et/ou des agents auxiliaires.

13. Le kit suivant la revendication 12, dans lequel les additifs et/ou agents auxiliaires sont sélectionnés parmi des sels acceptables, des alcools, des cétones, des acides carboxyliques, des sucres et des polymères.

14. Un usage de la composition fixative suivant l'une quelconque des revendications 1 à 7 ou le kit suivant l'une quelconque des revendications 8 à 13, pour examiner des échantillons de tissu en histopathologie, cytologie et en immunohistochimie.

15. L'usage suivant la revendication 14, dans lequel les échantillons de tissu proviennent d'organes d'origine humaine et animale.

16. L'usage suivant la revendication 15, dans lequel un échantillon de biopsie est examiné.

17. L'usage suivant l'une quelconque des revendications 14 à 16, dans lequel l'échantillon est fixé dans une période de 15 minutes et 5 heures.

18. L'usage suivant la revendication 17, dans lequel un échantillon de biopsie est fixé en 20 minutes.

19. L'usage suivant l'une quelconque des revendications 14 à 18, dans lequel un échantillon de biopsie ou un spécimen chirurgical est testé pour des protéines et/ou des acides nucléiques.

20. L'usage suivant la revendication 19, dans lequel le spécimen est testé pour un antigène.

21. L'usage suivant l'une quelconque des revendications 14 à 20, dans lequel la fixation est effectuée en présence de micro-ondes.
